# EUROPEAN PATENT APPLICATION

(11) **EP 4 657 241 A1**
(43) Date of publication of application: **03.12.2025**
(21) Application number: 23922301.9
(22) Date of filing: 22.09.2023
(51) Int. Cl.: G06F 8/20

(54) **METHOD FOR SOFTWARE CONSTRUCTION, APPARATUS, AND RELATED DEVICE**

(30) Priority: 16.02.2023 CN 202310126681
(71) Applicant: Huawei Cloud Computing Technologies Co., Ltd., Guiyang, Guizhou 550025 (CN)
(72) Inventor: GAO, Zhan, Guiyang, Guizhou 550025 (CN); ZHANG, Wugui, Guiyang, Guizhou 550025 (CN); HE, Jiajun, Guiyang, Guizhou 550025 (CN)
(74) Representative: Thun, Clemens
(86) International application number: PCT/CN2023/120630
(87) International publication number: WO 2024/169182

(57) **Abstract**

A software building method is provided, and includes: A first instance obtains a code file of to-be-built software from a code repository, and obtains, from a dependency library, a dependency file needed for building the software. The first instance generates a plurality of building tasks based on a plurality of targets in the code file, where different building tasks include different targets, and indicates a plurality of instances in a resource pool to execute the plurality of building tasks in parallel by using the dependency file, to obtain execution results respectively corresponding to the plurality of building tasks, so that the first instance obtains the software through building based on the plurality of execution results. In this way, in a software building process, the first instance executes building processes in parallel for the plurality of building tasks including different targets. Compared with a manner of building targets one by one on a single node, this can effectively improve building efficiency for the plurality of targets, and further effectively improve overall efficiency of software building.

## Description

This application claims priority to Chinese Patent Application No. 202310126681.5, filed with the China National Intellectual Property Administration on February 16, 2023 and entitled "SOFTWARE BUILDING METHOD AND APPARATUS, AND RELATED DEVICE", which is incorporated herein by reference in its entirety.

### TECHNICAL FIELD

This application relates to the field of computer technologies, and in particular, to a software building method and apparatus, and a related device.

### BACKGROUND

Software building means a process of converting source code into a software package through compiling, linking, packaging, and other processes, to implement software development. In an actual application scenario, as requirements of a software project continuously increase, a code amount of the software project also increases accordingly. Consequently, time consumed for building software on a single node is long, for example, may reach several hours or several days, which severely affects software development efficiency.

Therefore, how to improve software building efficiency becomes an important technical problem that needs to be urgently resolved.

### SUMMARY

In view of this, embodiments of this application provide a software building method, to shorten time consumed for software building, thereby improving software development efficiency. This application further provides a corresponding apparatus, a computing device cluster, a computer-readable storage medium, and a computer program product.

According to a first aspect, an embodiment of this application provides a software building method. The method is applied to a first instance in a resource pool, and the first instance may be, for example, a host, a virtual machine, or a container in the resource pool. In a software building process, the first instance obtains a code file of to-be-built software from a code repository, and obtains, from a dependency library, a dependency file needed for building the software, for example, a Jar package needed for building the software. Then, the first instance generates a plurality of building tasks based on a plurality of targets in the code file, where different building tasks may include different targets (target) to be built, and indicates a plurality of instances in the resource pool to execute the plurality of building tasks in parallel by using the dependency file, to obtain execution results respectively corresponding to the plurality of building tasks. The plurality of instances may include the first instance, or may not include the first instance, so that the first instance obtains the software through building based on the execution results respectively corresponding to the plurality of building tasks.

In this way, in a software building process, the first instance executes building processes in parallel for the plurality of building tasks including different targets. Compared with a manner of building targets one by one on a single node, this can effectively improve building efficiency for the plurality of targets, and further effectively improve overall efficiency of software building.

In a possible implementation, when obtaining the code file, the first instance may specifically perform distributed cache on the code file of the to-be-built software in the code repository, so that efficiency of obtaining the code file by the first instance can be improved, and overall efficiency of software building can be improved.

Optionally, the first instance may also cache the code file by using a technology such as consistent hashing, distributed file storage, or incremental update, to improve efficiency of obtaining the code file by the first instance.

In a possible implementation, when generating the plurality of building tasks, the first instance may specifically determine a compilation control file in the code file, for example, a cmakelist file or a ninja file, where the compilation control file includes a plurality of targets and dependency information of the plurality of targets; and then the first instance generates the plurality of building tasks for the to-be-built software based on the compilation control file. In this way, the first instance may generate the plurality of building tasks based on the compilation control file.

In a possible implementation, the plurality of targets that participate in generating the plurality of building tasks are all targets defined in the compilation control file; or the plurality of targets that participate in generating the plurality of building tasks are targets that meet a preset condition in the compilation control file, where the preset condition includes a preset type, a costumer type, an external project type, and the like, or the preset condition includes a preset identifier, for example, a specified file name. In actual application, a part or all of targets in the compilation control file may be flexibly selected based on a requirement to generate the plurality of building tasks, so that software building is accelerated.

In a possible implementation, that the first instance outputs a configuration interface may be, for example, outputting the configuration interface to a client provided externally, where the configuration interface may be presented to a user via the client, so that the first instance determines the preset condition in response to a configuration operation of the user in the configuration interface for the preset condition. In this way, the user may flexibly select, in the configuration interface, the plurality of targets that need to participate in building acceleration, so that flexibility of target selection in the software building process can be improved.

In a possible implementation, when indicating the plurality of instances in the resource pool to execute the plurality of building tasks in parallel by using the dependency file, the first instance may specifically distribute the plurality of building tasks to the plurality of instances according to a preset rule. The plurality of building tasks are executed by the plurality of instances in parallel, and different instances execute different building tasks, so that the first instance may obtain the execution results that are respectively corresponding to the plurality of building tasks and that are fed back by the plurality of instances. In this way, the first instance may use the plurality of instances in the resource pool to accelerate building of the plurality of targets, to improve overall efficiency of software building.

In a possible implementation, when generating the plurality of building tasks, the first instance may specifically group the plurality of targets in the compilation control file based on a quantity of the plurality of instances or directories to which building products of the plurality of targets belong, for example, classify one or more targets whose building products are in a same directory into one group, to obtain the plurality of building tasks, where a target included in each building task is a group of targets in the plurality of targets. In this way, after the plurality of targets are grouped and built based on the directories to which the building products belong, building efficiency for the plurality of targets can be improved.

In a possible implementation, the compilation control file further includes another target different from the plurality of targets that participate in generating the plurality of building tasks. In the software building process, the first instance may further build the another target in the compilation control file, to obtain a local execution result, and obtain the software through building based on the local execution result and the execution results respectively corresponding to the plurality of building tasks. In this way, the first instance and the plurality of other instances in the resource pool may jointly complete accelerated software building.

According to a second aspect, an embodiment of this application provides a software building method. The method includes: obtaining a compilation control file such as a cmakelist file or a ninja file in a code file of to-be-built software, where the compilation control file includes a plurality of targets and dependency information of the plurality of targets, and obtaining a dependency file needed for building the software; then generating a plurality of building tasks for the software based on the compilation control file, where different building tasks in the plurality of building tasks include different targets; and executing the plurality of building tasks in parallel to obtain execution results respectively corresponding to the plurality of building tasks, and obtaining the software through building based on the execution results respectively corresponding to the plurality of building tasks. In this way, in a software building process, building processes are executed in parallel for the plurality of building tasks including different targets. Compared with a manner of building targets one by one on a single node, this can effectively improve building efficiency for the plurality of targets, and further effectively improve overall efficiency of software building.

According to a third aspect, an embodiment of this application further provides a software building apparatus. The software building apparatus includes modules configured to perform the software building method in any one of the first aspect or the possible implementations of the first aspect.

According to a fourth aspect, an embodiment of this application further provides a software building apparatus. The software building apparatus includes modules configured to perform the software building method in the implementations of the second aspect.

According to a fifth aspect, this application provides a computing device cluster. The computing device includes at least one computing device, and the at least one computing device includes at least one processor and at least one memory. The at least one memory is configured to store instructions, and the at least one processor executes the instructions stored in the at least one memory, so that the computing device cluster performs the software building method in any one of the first aspect or the possible implementations of the first aspect, or the computing device cluster performs the software building method in the implementations of the second aspect. It should be noted that the memory may be integrated into the processor, or may be independent of the processor. The at least one computing device may further include a bus. The processor is connected to the memory through the bus. The memory may include a readable memory and a random access memory.

According to a sixth aspect, this application provides a computer-readable storage medium. The computer-readable storage medium stores instructions, and when the instructions are run on at least one computing device, the at least one computing device is enabled to perform the method in any one of the first aspect or the implementations of the first aspect, or the at least one computing device is enabled to perform the software building method in the implementations of the second aspect.

According to a seventh aspect, this application provides a computer program product including instructions. When the computer program product runs on at least one computing device, the at least one computing device is enabled to perform the method in any one of the first aspect or the implementations of the first aspect, or the at least one computing device is enabled to perform the software building method in the implementations of the second aspect.

In this application, based on the implementations provided in the foregoing aspects, the implementations may be further combined to provide more implementations.

### BRIEF DESCRIPTION OF DRAWINGS

FIG. 1 is a diagram of an example application scenario according to an embodiment of this application;
FIG. 2 is a schematic flowchart of a software building method according to an embodiment of this application;
FIG. 3 is a diagram of a configuration interface according to an embodiment of this application;
FIG. 4 is a diagram of a structure of a computing device according to an embodiment of this application; and
FIG. 5 is a diagram of a structure of a computing device cluster according to an embodiment of this application.

### DESCRIPTION OF EMBODIMENTS

The following describes the solutions in embodiments provided in this application with reference to the accompanying drawings in this application.

Generally, in a software development process, a user (for example, a developer) usually needs to sequentially perform compiling (compiling), linking (linking), packaging, and other processes on compiled source code, to complete software building. Compiling means a process of translating, by using a compiler, a source code program written in a source language into program code based on a target language, for example, translating source code written in a high-level language such as C or Java into program code based on a machine language. Linking is a process of collecting and combining various program code and data parts into a single file. Packaging is a process of combining and compressing a plurality of code files into one file.

In an actual application scenario, a code amount of software developed by the user is large, and a quantity of to-be-built targets (target) in program code of the software is large. The target may be specifically a name of a to-be-built file, or may be a name of a to-be-performed operation, and indicates an operation purpose (that is, indicates what to do) when a command is executed. Therefore, long time is consumed for performing compiling, linking, packaging, and other building processes for the large quantity of targets one by one in the program code. Consequently, long time is usually consumed for software building on a single node, which affects software development efficiency of the user.

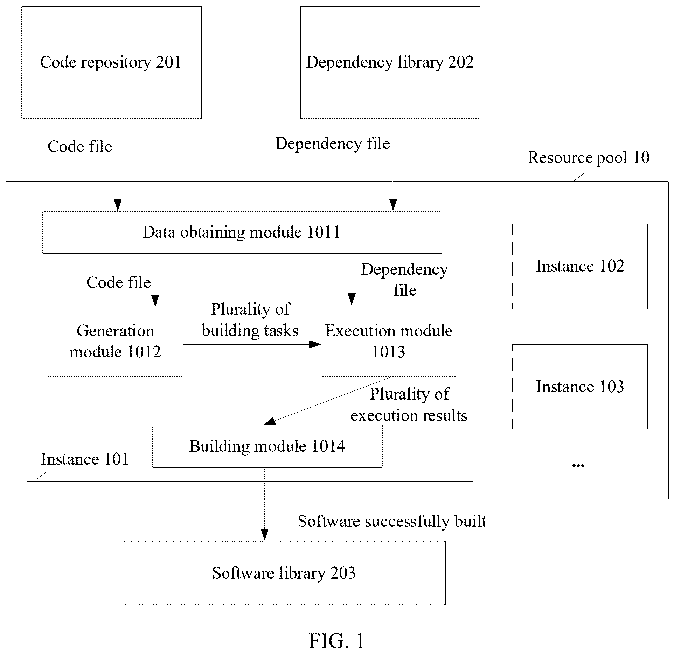

Based on this, embodiments of this application provide a software building method, to shorten time consumed for software building, thereby improving software development efficiency. During specific implementation, as shown in FIG. 1, the method may be performed by an instance 101 in a resource pool 10. The resource pool 10 includes a plurality of instances. In FIG. 1, an example in which the instance 101, an instance 102, and an instance 103 are included is used for description. For example, the instances in the resource pool 10 may include one or more of a host, a virtual machine, and a container in the resource pool 10, or may be instances implemented in another manner. This is not limited.

In a software building process, the instance 101 obtains, from a code repository 201, a code file of to-be-built software, and obtains, from a dependency library 202, a dependency file needed for building the software. Then, the instance 101 generates a plurality of building tasks based on the obtained code file, where different building tasks include different to-be-built targets in the code file. Then, the instance 101 indicates the plurality of instances in the resource pool 10 to execute the plurality of building tasks in parallel by using the dependency file, to obtain execution results respectively corresponding to the plurality of building tasks. The plurality of instances that participate in executing the plurality of building tasks in parallel may be the instance 102 and the instance 103. Further, the plurality of instances may further include the instance 101 and the like. Therefore, the instance 101 obtains the software through building based on the execution results respectively corresponding to the plurality of building tasks, to complete software development. In the software building process, the instance 101 executes building processes in parallel for the plurality of generated building tasks. Therefore, compared with a manner of building targets one by one on a single node, this can effectively improve building efficiency for a plurality of targets, and further effectively improve overall efficiency of software building.

For example, in the software building process, specifically, a plurality of functional modules in the instance 101 may collaborate to complete the software building process. As shown in FIG. 1, the instance 101 may include a data obtaining module 1011, a generation module 1012, an execution module 1013, and a building module 1014. The data obtaining module 1011 is configured to obtain the code file of the to-be-built software, and obtain the dependency file needed for building the software, for example, obtain the code file from the code repository 201, and obtain the dependency file from the dependency library 202. Then, the data obtaining module 1011 may provide the obtained code file to the generation module 1012, and provide the dependency file to the execution module 1013. The generation module 1012 generates the plurality of building tasks based on the plurality of targets in the code file, where different building tasks in the plurality of building tasks include different targets, and provides the plurality of building tasks to the execution module 1013. The execution module 1013 indicates the plurality of instances in the resource pool 10 to execute the plurality of building tasks in parallel by using the dependency file, to obtain the corresponding execution results, provides the execution results respectively corresponding to the plurality of building tasks to the building module 1014, to obtain the execution results respectively corresponding to the plurality of building tasks, and provides the plurality of execution results to the building module 1014. The building module 1014 obtains the developed software through building based on the execution results respectively corresponding to the plurality of building tasks, to complete software development.

Further, the instance 101 may further include another functional module, for example, may further include a configuration module. The configuration module is configured to perform corresponding configuration on the building process for the instance 101, for example, configure a quantity of building tasks that are executed in parallel, and configure types of targets whose building processes are executed in parallel.

In actual application, after obtaining the software through building, the instance 101 may further add the software to a software library 203 for persistent storage, so that a user can subsequently obtain the built software from the software library 203.

In an example, the resource pool 10, the code repository 201, the dependency library 202, and the software library 203 may be deployed on a cloud, and are configured to provide a software building cloud service to the user/a tenant. For example, the cloud may be, for example, a public cloud, a private cloud, or an edge cloud. In addition, the plurality of instances in the resource pool 10 may be implemented by a computing device or a computing device cluster in the cloud. The code repository 201, the dependency library 202, and the software library 203 may be implemented by a storage device or a storage device cluster in the cloud. In this way, the software building cloud service can be provided.

In another example, the resource pool 10, the code repository 201, the dependency library 202, and the software library 203 may be deployed locally, to provide a local software building service to the user/tenant. For example, the plurality of instances in the resource pool 10 may be implemented by one or more computing devices on a user side, and the code repository 201, the dependency library 202, and the software library 203 may be implemented by one or more storage devices on the user side.

The instance 101 may be implemented by software, or may be implemented by hardware.

As an example of a software functional unit, the instance 101 may include code that is run on a computing instance. The computing instance may include at least one of a host, a virtual machine, and a container. Further, there may be one or more computing instances. For example, the instance 101 may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. One region may usually include a plurality of AZs.

Similarly, the plurality of hosts/virtual machines/containers configured to run the code may be distributed in a same virtual private cloud (virtual private cloud, VPC), or may be distributed in a plurality of VPCs. One VPC is usually disposed in one region. For cross-region communication between two VPCs in a same region and between VPCs in different regions, a communication gateway needs to be disposed in each VPC, and interconnection between the VPCs is implemented through the communication gateway.

The instance 101 is used as an example of a hardware functional unit, and the instance 101 may include at least one computing device, such as a server. Alternatively, the instance 101 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field-programmable gate array, FPGA), a generic array logic (generic array logic, GAL), or any combination thereof.

A plurality of computing devices included in the instance 101 may be distributed in a same region, or may be distributed in different regions. The plurality of computing devices included in the instance 101 may be distributed in a same AZ, or may be distributed in different AZs. Similarly, the plurality of computing devices included in the instance 101 may be distributed in a same VPC, or may be distributed in a plurality of VPCs. The plurality of computing devices may be any combination of computing devices such as the server, the ASIC, the PLD, the CPLD, the FPGA, and the GAL.

The following describes in detail various non-limiting specific implementations in a software building process.

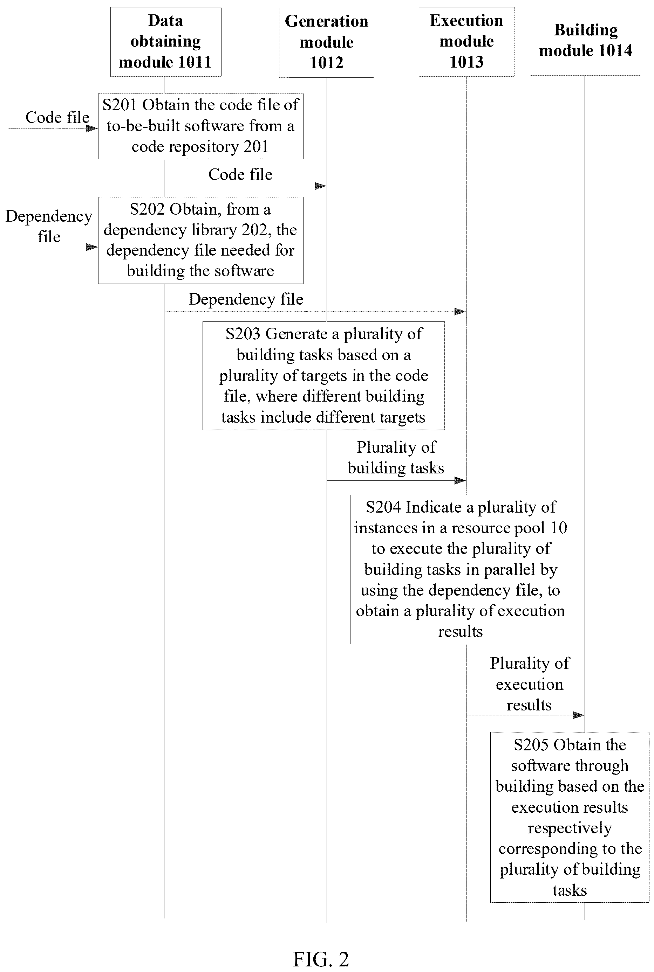

FIG. 2 is a schematic flowchart of a software building method according to an embodiment of this application. The method may be applied to the application scenario shown in FIG. 1, or may be applied to another applicable application scenario. For ease of understanding, the following provides descriptions by using an example in which the method is applied to the application scenario shown in FIG. 1. The software building method shown in FIG. 2 may specifically include the following steps.

S201: A data obtaining module 1011 obtains a code file of to-be-built software from a code repository 201.

S202: The data obtaining module 1011 obtains, from a dependency library 202, a dependency file needed for building the software.

In this embodiment, an instance 101 may be applied to a project using a building framework. The building framework may be, for example, any one of a CMake building framework, a Gradle building framework, a Bazel building framework, and a Scons building framework, or may be another applicable building framework. Correspondingly, the project using the building framework may be, for example, an Android open-source project (Android open-source project, AOSP), or an AOSP-based derivative project, such as any one of projects such as Android, EMUI, MIUI, ColorOS, OriginOS, One UI, ZUI, and hydrogen OS, or may be another project, such as an OpenHarmony project or an intelligent vehicle infotainment system used for a vehicle. In this embodiment, the building framework and the project to which the instance 101 is applied are not limited.

In a possible implementation, the instance 101 may provide a client externally. The client may be, for example, a web browser, or may be an application deployed on a user terminal. In this way, a user may provide, by using the client, the instance 101 with an identifier of the code file of the to-be-built software, for example, a name of the code file, so that the data obtaining module 1011 may obtain the corresponding code file from the code repository 201 based on the identifier.

In addition, the user may provide, by using the client, the instance 101 with an identifier of the dependency file needed for building the software, so that the data obtaining module 1011 may obtain the corresponding dependency file from the dependency library 202 based on the identifier. The dependency file is a file that needs to be depended on in a target building process, for example, a Jar package or a software development kit (Software Development Kit, SDK). In actual application, for software developed based on different program languages, the instance 101 may complete software building by using different dependency files.

Further, when obtaining the code file, the data obtaining module 1011 may specifically perform distributed cache on the code file of the to-be-built software in the code repository 201, to accelerate obtaining of the code file, thereby improving overall efficiency of software building. Alternatively, the data obtaining module 101 may accelerate obtaining of the code file by using a technology such as consistent hashing, distributed file storage, or incremental update. Similarly, the data obtaining module 101 may also obtain, from the dependency library 202 by using a technology such as distributed cache, consistent hashing, distributed file storage, or incremental update, the dependency file needed for building the software.

In actual application, the data obtaining module 1011 may alternatively obtain the code file and the dependency file in another manner. This is not limited in this embodiment.

After obtaining the code file, the data obtaining module 1011 may provide the code file to a generation module 1012, and provide the dependency file to an execution module 1013.

S203: The generation module 1012 generates a plurality of building tasks based on a plurality of targets in the code file, where different building tasks in the plurality of building tasks include different targets.

For example, the user may send, to the instance 101 by using the client, a building command for a software project, for example, a CMake command or a command of a Soong tool in the AOSP project, so that the instance 101 (which may be specifically the generation module 1012) may generate a corresponding compilation control file in the building framework, for example, a cmakelist file or a ninja file. Generally, a plurality of targets are defined in the compilation control file, and dependency information (dependencies) of the plurality of targets is indicated. The dependency information indicates a file or another target needed for generating a target, that is, successful building of a target A needs successful building of another target on which the target A depends.

In addition, target building usually needs an environment variable (environment variables), where the environment variable means some parameters used to specify an operating system running environment in an operating system, for example, a temporary folder location and a system folder location. Therefore, the data obtaining module 1011 may further obtain environment variables respectively needed for building the plurality of targets in the compilation control file.

After obtaining the compilation control file, the generation module 1012 may generate the plurality of building tasks based on the compilation control file. Different building tasks in the plurality of building tasks include different targets.

It may be understood that, if the targets in the compilation control file are sequentially built by a single node, time consumed in this serial building process is long, and efficiency of software building is affected. Therefore, the generation module 1012 may generate the plurality of building tasks based on the targets defined in the compilation control file and a dependency relationship between the targets, to subsequently accelerate overall efficiency of software building by executing the plurality of building tasks in parallel.

In a first implementation of generating the building task, the generation module 1012 may generate a target dependency information tree based on the compilation control file, where the target dependency information tree indicates a dependency relationship between the plurality of targets in a tree structure manner, including the dependency relationship between the targets, other files on which the targets depend, and the like. Then, the generation module 1012 may generate the plurality of building tasks based on the target dependency information tree. Each building task may include one target, and is responsible for completing building of the target. In addition, the building task further indicates a file or another target on which the target included in the building task depends. In this way, for the plurality of targets defined in the compilation control file, the generation module 1012 may generate the plurality of corresponding building tasks.

In a second implementation of generating the building task, the generation module 1012 may group, based on a target dependency information tree corresponding to the compilation control file, the plurality of targets defined in the compilation control file. Specifically, targets having a direct or indirect dependency relationship may be classified into a same group, and each group includes at least one target (targets having no dependency relationship may be classified into a group separately). Therefore, the generation module 1012 may generate the plurality of building tasks based on a plurality of groups, and each group is used to generate one building task.

When grouping the plurality of targets, the generation module 1012 may group the targets based on directories to which building products of the plurality of targets belong, and specifically, may classify one or more targets whose building products are in a same directory into one group. In an actual scenario, after the plurality of targets are grouped and built based on the directories to which the building products belong, building efficiency for the plurality of targets can be improved.

Certainly, the generation module 1012 may alternatively group the plurality of targets based on another implementation. For example, the generation module 1012 may alternatively classify targets belonging to a same project directory into a same group, and targets in different groups belong to different project directories. Alternatively, when the plurality of building tasks are executed by a plurality of clients in parallel, the generation module 1012 may perform grouping based on a quantity of clients. For example, when the quantity of clients is 3, the generation module 1012 may classify the plurality of targets into three groups, to generate three building tasks.

It should be noted that the foregoing implementations of generating the plurality of building tasks are merely used as some examples for description. In actual application, the plurality of building tasks may alternatively be generated by combining the foregoing plurality of implementations, or in another applicable manner. This is not limited in this embodiment.

In this embodiment, the plurality of targets used to generate the building tasks may be all targets in the compilation control file. Alternatively, the plurality of targets used to generate the building tasks may be some targets in the compilation control file. For example, the generation module 1012 may first select a plurality of targets that meet a preset condition from the compilation control file, and generate the plurality of building tasks based on the plurality of targets, where a remaining target in the compilation control file does not meet the preset condition.

For example, the preset condition may be, for example, a preset type or a preset identifier. For example, in the compilation control file generated in the CMake building framework, the preset type may be specifically a costumer type, an external project type, or the like. In other words, the generation module 1012 may select a plurality of targets that belong to the costumer type or the external project type. For another example, the preset identifier may be specifically a file name or the like, so that the generation module 1012 may select, from the compilation control file, a plurality of targets that match a pre-specified file name.

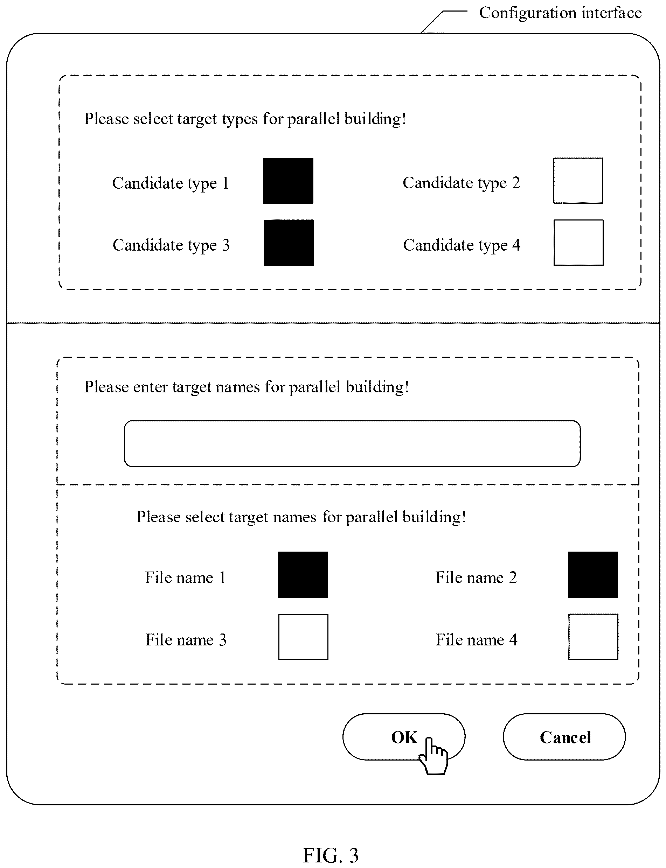

In an actual application scenario, before software building is performed, a user 200 may configure the preset condition. Specifically, a configuration module 105 in the instance 101 may generate a configuration interface, for example, the configuration interface shown in FIG. 3, and output the configuration interface to the client, to present the configuration interface on the client. In this way, the user 200 may perform a corresponding configuration operation in the configuration interface for the preset condition, for example, may select a part of types from a plurality of presented candidate types as the preset type. Alternatively, the user 200 may enter a specified file name in the configuration interface shown in FIG. 3, where the enter file name is used as the preset identifier, or select a part of file names from a plurality of presented file names as the preset identifier, or the like. In this way, the configuration module 105 may determine the preset condition based on the configuration operation performed by the user 200, and provide the determined preset condition to the generation module 1012, so that the generation module 1012 selects the plurality of targets from the compilation control file based on the preset condition, and generates the plurality of corresponding building tasks.

After generating the plurality of building tasks, the generation module 1012 may provide the plurality of building tasks to the execution module 1013.

S204: The execution module 1013 indicates a plurality of instances in a resource pool 10 to execute the plurality of building tasks in parallel by using the dependency file, to obtain execution results respectively corresponding to the plurality of building tasks.

The execution results corresponding to the plurality of building tasks may not only include information indicating that the building task is successfully executed or fails to be executed, but also include a building product generated after the target in the building task is built. The building product may be, for example, a group of files that implement one or more functions, and may be specifically a jar package or a war package, or may be a group of files in a ".o" format, binary files, executable files, files with a suffix extension, or the like. This is not limited.

In this embodiment, the plurality of building tasks are executed in parallel, to improve overall efficiency of software building.

In a possible implementation, the execution module 1013 may allocate the plurality of building tasks to the plurality of instances based on a quantity of the plurality of instances participating in parallel execution of the building tasks, a preset scheduling rule, or related information of the building tasks, where each instance may be responsible for executing one or more building tasks.

For example, when allocating the building tasks based on the quantity of the plurality of instances participating in parallel execution of the building tasks, the execution module 1013 may, for example, allocate the building tasks to all the instances as evenly as possible, that is, quantities of building tasks allocated to all the instances may be as consistent as possible. For example, when the quantity of building tasks is 10 and the quantity of instances is 5, two building tasks may be evenly allocated to each instance for execution.

When the execution module 1013 allocates the building tasks based on the preset scheduling rule, the scheduling rule may be, for example, a random allocation rule (that is, each building task is randomly allocated to an instance), a load balancing rule (that is, loads generated after the building tasks are allocated to the plurality of instances are as balanced as possible), or another applicable rule.

When the execution module 1013 allocates the building tasks based on the related information of the building tasks, the related information may be, for example, a dependency relationship between targets in different building tasks. For example, assuming that the plurality of building tasks are generated based on the target dependency information tree, targets in some building tasks may be targets used as leaf nodes in the target dependency information tree, and targets in remaining building tasks are used as upper-layer nodes of the leaf nodes. In this case, when allocating the building tasks, the execution module 1013 may first allocate, to the plurality of instances for parallel execution, the building tasks in which the targets used as the leaf nodes are located. After execution of these building tasks is completed, the plurality of instances may feed back, to the execution module 1013, a feedback indicating that the building tasks are successfully executed. Therefore, the execution module 1013 allocates, based on a dependency relationship between nodes in the target dependency information tree, the remaining building tasks to the plurality of instances to continue parallel execution, so that the plurality of instances can continue to execute the remaining building tasks by using execution results generated by the executed building tasks. In this way, the execution module 1013 and the plurality of instances may cyclically execute the foregoing processes of allocating and executing the building tasks, to complete execution of all the building tasks, and obtain execution results respectively corresponding to all the building tasks.

The foregoing implementations of allocating the building tasks are merely used as some examples for description. In another embodiment, the building tasks may be allocated by combining the foregoing plurality of implementations, or in another applicable manner. This is not limited.

In addition, when allocating the building tasks to the plurality of instances, the execution module 1013 may further send, to each instance, a dependency file needed for executing the building task, so that each instance can execute, by using the dependency file, the building task allocated to the instance. Alternatively, a dependency file in the resource pool 10 may be shared by the plurality of instances, so that each instance may execute the building task based on the shared dependency file.

It should be noted that one or more building tasks may be simultaneously allocated to each instance. When a plurality of building tasks are allocated to each instance, the instance may sequentially execute the building tasks by using the dependency file. When executing the building task, specifically, the instance executes, by using the dependency file, a building process on one or more targets included in the building task. A specific building operation performed on the target has a related application in an actual application scenario, and details are not described herein. Alternatively, each instance may execute the plurality of allocated building tasks in parallel. For example, a plurality of threads may be created inside each instance, and each thread may be responsible for processing one building task. Therefore, after the plurality of building tasks are allocated to each instance, the plurality of building tasks allocated to the instance may be executed in parallel by using the plurality of threads. In actual application, it may be determined that the building tasks are executed in series/parallel on the instance based on a dependency between targets in different building tasks.

In this embodiment, when the targets in the plurality of building tasks are all targets defined in the compilation control file, the execution module 1013 may allocate all the building tasks to the plurality of instances for execution.

Alternatively, when the targets in the plurality of building tasks are some targets defined in the compilation control file, the execution module 1013 may use some targets as the building tasks and allocate the building tasks to the plurality of instances for execution, and remaining targets in the compilation control file may be executed by the execution module 1013. In this case, the instance 101 also participates in executing the building task. In an actual application scenario, due to a computing power difference between the instance 101 and other instances, for different targets in the compilation control file, efficiency of completing building on the instance 101 and the other instances may be different, that is, efficiency of executing some targets by the instance 101 may be higher than efficiency of executing the some targets by the other instances. Therefore, the execution module 1013 may use, based on a computing power requirement needed for executing the target, some targets in the compilation control file as building tasks and allocate the building tasks to the plurality of other instances to complete building, and the other targets may be built by the instance 101, so that efficiency of software building can be further improved.

For example, when the compilation control file is specifically a cmakelist file, the targets in the plurality of building tasks generated by the generation module 1012 are some targets defined in the cmakelist file, for example, may be some targets of a specified type (such as an ExternalProject type or a CustomTarget type) or some targets with a specified identifier. Therefore, the plurality of other instances than the instance 101 in the resource pool 10 execute the plurality of building tasks in parallel, and the instance 101 executes the remaining targets in the compilation control file. In addition, in a process in which the execution module 1013 allocates the building tasks, each building task may include one target, and the execution module 1013 may allocate the building tasks to the plurality of instances one by one based on the dependency relationship between the targets, so that after building the target used as the leaf node, the plurality of instances build the target used as the upper-layer node of the leaf node.

Alternatively, when the compilation control file is specifically a ninja file, and the targets in the plurality of building tasks are some targets defined in the ninja file, when generating the plurality of building tasks, the generation module 1012 may further generate a new first ninja file and a new second ninja file, and send the first ninja file and the plurality of building tasks together to the plurality of instances. In addition, the building task allocated to each instance may include a group of targets having a dependency relationship. In this way, the execution module 1013 may allocate, to each instance at a time, the plurality of targets that need to be built, and does not need to perform allocation one by one based on the execution results. Each instance executes the building task based on the first ninja file, where the first ninja file defines the targets in the plurality of building tasks and dependency information of the targets. In addition, the execution module 1013 may execute the remaining targets in the compilation control file based on the second ninja file, where the second ninja file defines the remaining targets in the original ninja file and dependency information of the targets.

After executing each building task and generating a corresponding execution result, each instance may synchronize the execution result to another instance, so that the another instance may execute, based on the execution result obtained through synchronization, a building task allocated to the another instance. In this way, a case in which building efficiency of the target allocated to the another instance is affected when a dependency bottleneck occurs on a single instance node can be avoided, to ensure overall efficiency of software building. When the instance 101 also performs a building operation on some targets, the another instance may further synchronize, to the instance 101, the execution result generated by executing the building task.

After generating the execution results respectively corresponding to the plurality of building tasks, the execution module 1013 may provide the execution results to a building module 1014.

S205: The building module 1014 obtains the software through building based on the execution results respectively corresponding to the plurality of building tasks.

The obtained software through building is software that needs to be developed by the user.

During specific implementation, when the targets in the plurality of building tasks are some targets defined in the compilation control file, the building module 1014 may summarize the execution results respectively corresponding to the plurality of building tasks, and continue to complete building of the remaining targets in the compilation control file based on a summarized execution result, to complete building of all the targets in the compilation control file, and obtain the software through building. When the targets in the plurality of building tasks are all targets defined in the compilation control file, the building module 1014 may obtain a building result for the software by summarizing the execution results respectively corresponding to the building tasks.

In this embodiment, in a software building process, the instance 101 executes building processes in parallel for the plurality of building tasks including different targets. Therefore, compared with a manner of building targets one by one on a single node, this can effectively improve building efficiency for a plurality of targets, and further effectively improve overall efficiency of software building.

It should be noted that the step execution sequence shown in FIG. 2 is merely used as an implementation example, and is not intended to impose a limitation. For example, in another possible implementation, the instance 101 may perform step S202 before step S201, or simultaneously perform step S201 and step S202.

In addition, in this embodiment, division and function descriptions of the modules in the instance 101 are merely used as an example. For example, in another embodiment, the data obtaining module 1011 may be configured to perform any step in the foregoing software building method. Similarly, the generation module 1012, the execution module 1013, and the building module 1014 may be configured to perform any step in the foregoing software building method. In addition, steps that the data obtaining module 1011, the generation module 1012, the execution module 1013, and the building module 1014 are responsible for implementing may be specified as required, and the data obtaining module 1011, the generation module 1012, the execution module 1013, and the building module 1014 respectively implement different steps in the software building method to implement all functions of the instance 101.

In the embodiments shown in FIG. 1 and FIG. 2, the instance 101 (including the data obtaining module 1011, the generation module 1012, the execution module 1013, and the building module 1014) used in the software building process may be software configured on a computing device or a computing device cluster. In addition, the computing device or the computing device cluster may implement the functions of the instance 101 by running the software on the computing device or the computing device cluster. The following describes in detail an instance 101 used in a software building process from a perspective of hardware device implementation.

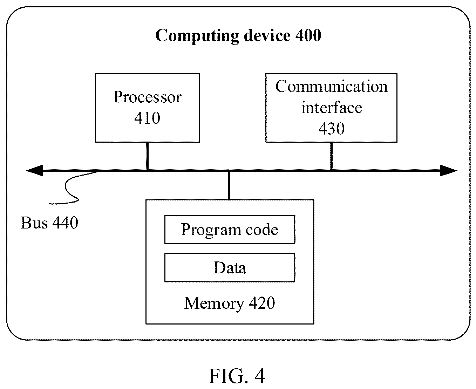

FIG. 4 is a diagram of a structure of a computing device. The foregoing instance 101 may be deployed on the computing device. The computing device may be a computing device (for example, a server) in a cloud environment, a computing device in an edge environment, a terminal device, or the like, and may be specifically configured to implement functions of the data obtaining module 1011, the generation module 1012, the execution module 1013, and the building module 1014 in the embodiment shown in FIG. 1.

As shown in FIG. 4, the computing device 400 includes a processor 410, a memory 420, a communication interface 430, and a bus 440. The processor 410, the memory 420, and the communication interface 430 communicate with each other through the bus 440. The bus 440 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is for representing the bus in FIG. 4, but this does not mean that there is only one bus or only one type of bus. The communication interface 430 is configured to communicate with the outside, for example, obtain a code file from a code repository, and obtain a dependency file from a dependency library.

The processor 410 may be a central processing unit (central processing unit, CPU), an application-specific integrated circuit (application-specific integrated circuit, ASIC), a graphics processing unit (graphics processing unit, GPU), or one or more integrated circuits. The processor 410 may alternatively be an integrated circuit chip and has a signal processing capability. In an implementation process, functions of the modules in the instance 101 may be completed by using an integrated logic circuit of hardware in the processor 410, or by using instructions in a form of software. The processor 410 may alternatively be a general-purpose processor, a data signal processor (digital signal processor, DSP), a field programmable gate array (field programmable gate array, FPGA) or another programmable logic device, a discrete gate or transistor logic device, or a discrete hardware component, and may implement or perform the methods, steps, and logical block diagrams disclosed in embodiments of this application. The general-purpose processor may be a microprocessor, or the processor may be any conventional processor or the like. The method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 420. The processor 410 reads information in the memory 420, and completes some or all functions in the instance 101 in combination with hardware of the processor 410.

The memory 420 may include a volatile memory (volatile memory), for example, a random access memory (random access memory, RAM). The memory 420 may further include a non-volatile memory (non-volatile memory), for example, a read-only memory (read-only memory, ROM), a flash memory, an HDD, or an SSD.

The memory 420 stores executable code, and the processor 410 executes the executable code to perform the method performed by the instance 101.

Specifically, when the embodiment shown in FIG. 2 is implemented, and the data obtaining module 1011, the generation module 1012, the execution module 1013, and the building module 1014 described in the embodiment shown in FIG. 2 are implemented by using software, software or program code needed for performing functions of the data obtaining module 1011, the generation module 1012, the execution module 1013, and the building module 1014 in FIG. 2 is stored in the memory 420, interaction between the data obtaining module 1011 and another device is implemented through the communication interface 430. The processor is configured to execute the instructions in the memory 420, to implement the method performed by the instance 101.

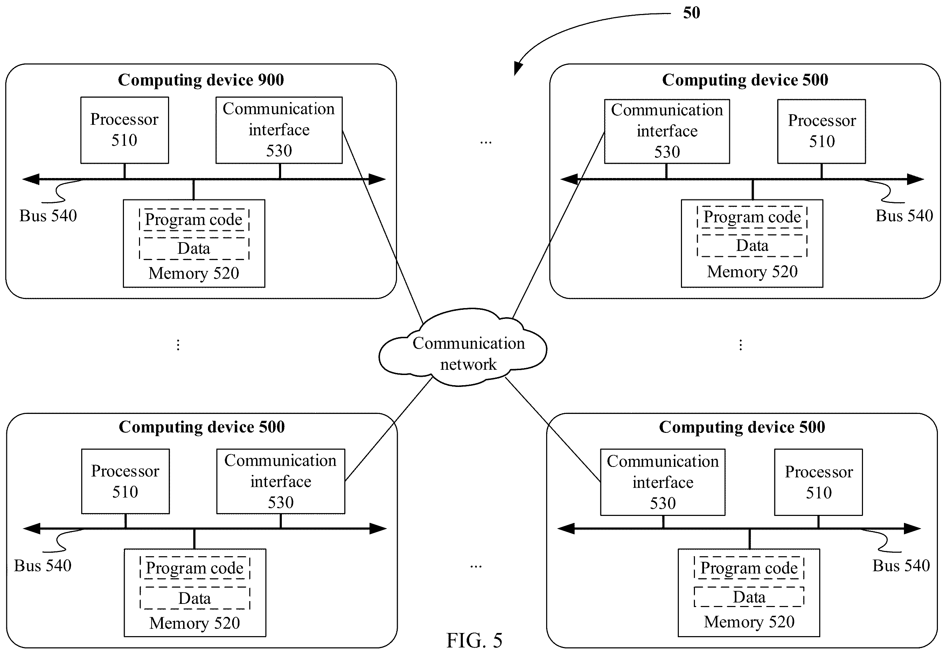

FIG. 5 is a diagram of a structure of a computing device cluster. The computing device cluster 50 shown in FIG. 5 includes a plurality of computing devices, and the foregoing instance 101 may be deployed on the plurality of computing devices in the computing device cluster 50 in a distributed manner. As shown in FIG. 5, the computing device cluster 50 includes the plurality of computing devices 500. Each computing device 500 includes a memory 520, a processor 510, a communication interface 530, and a bus 540. The memory 520, the processor 510, and the communication interface 530 implement mutual communication connections through the bus 540.

The processor 510 may be a CPU, a GPU, an ASIC, or one or more integrated circuits. The processor 510 may alternatively be an integrated circuit chip and has a signal processing capability. In an implementation process, some functions of the instance 101 may be completed by using an integrated logic circuit of hardware in the processor 510, or by using instructions in a form of software. The processor 510 may alternatively be a DSP, an FPGA, a general-purpose processor, another programmable logic device, a discrete gate or transistor logic device, or a discrete hardware component, and may implement or perform some of methods, steps, and logical block diagrams disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 520. In each computing device 500, the processor 510 reads information in the memory 520, and may complete some functions of the instance 101 in combination with hardware of the processor 510.

The memory 520 may include a ROM, a RAM, a static storage device, a dynamic storage device, a hard disk (for example, an SSD or an HDD), and the like. The memory 520 may store program code, for example, a part or all of program code used to implement the data obtaining module 1011, a part or all of program code used to implement the generation module 1012, a part or all of program code used to implement the execution module 1013, and a part or all of program code used to implement the building module 1014. For each computing device 500, when the program code stored in the memory 520 is executed by the processor 510, the processor 510 performs, based on the communication interface 530, some methods performed by the instance 101. For example, some computing devices 500 may be configured to perform the methods performed by the data obtaining module 1011 and the generation module 1012, and the other computing devices 500 are configured to perform the methods performed by the execution module 1013 and the building module 1014. The memory 520 may further store data, for example, intermediate data or result data generated by the processor 510 in an execution process, for example, the foregoing code file, dependency file, or built software.

The communication interface 503 in each computing device 500 is configured to communicate with the outside, for example, interact with another computing device 500.

The bus 540 may be a peripheral component interconnect bus, an extended industry standard architecture bus, or the like. For ease of representation, the bus 540 in each computing device 500 in FIG. 5 is represented by using only one thick line, but this does not mean that there is only one bus or only one type of bus.

A communication path is established between the foregoing the plurality of computing devices 500 by using a communication network, to implement a function of the instance 101. Any computing device may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, the one or more computing devices are enabled to perform the method performed by each module included in the instance 101 in the foregoing embodiments.

In addition, an embodiment of this application further provides a computer program product. When the computer program product is executed by one or more computing devices, the one or more computing devices perform any method in the software building methods. The computer program product may be a software installation package. When any one of the foregoing software building methods needs to be used, the computer program product may be downloaded, and the computer program product may be executed on the computer.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

Based on the descriptions of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented through corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the existing technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A software building method, wherein the method is applied to a first instance in a resource pool, and the method comprises:
obtaining, by the first instance, a code file of to-be-built software from a code repository;
obtaining, by the first instance from a dependency library, a dependency file needed for building the software;
generating, by the first instance, a plurality of building tasks based on a plurality of targets in the code file, wherein different building tasks in the plurality of building tasks comprise different targets;
indicating, by the first instance, a plurality of instances in the resource pool to execute the plurality of building tasks in parallel by using the dependency file, to obtain execution results respectively corresponding to the plurality of building tasks; and
obtaining, by the first instance, the software through building based on the execution results respectively corresponding to the plurality of building tasks.

2. The method according to claim 1, wherein obtaining, by the first instance, the code file of the to-be-built software from the code repository comprises:
performing, by the first instance, distributed cache on the code file of the software in the code repository.

3. The method according to claim 1 or 2, wherein generating, by the first instance, the plurality of building tasks based on the plurality of targets in the code file comprises:
determining, by the first instance, a compilation control file in the code file, wherein the compilation control file comprises a plurality of targets and dependency information of the plurality of targets; and
generating, by the first instance, the plurality of building tasks for the software based on the compilation control file.

4. The method according to claim 3, wherein the plurality of targets are all targets defined in the compilation control file; or
the plurality of targets are targets that meet a preset condition in the compilation control file, and the preset condition comprises a preset type or a preset identifier.

5. The method according to claim 4, wherein the method further comprises:
outputting, by the first instance, a configuration interface; and
determining, by the first instance, the preset condition in response to a configuration operation of a user in the configuration interface for the preset condition.

6. The method according to any one of claims 3 to 5, wherein indicating, by the first instance, the plurality of instances in the resource pool to execute the plurality of building tasks in parallel by using the dependency file, to obtain the execution results respectively corresponding to the plurality of building tasks comprises:
distributing, by the first instance, the plurality of building tasks to the plurality of instances according to a preset rule, wherein the plurality of building tasks are executed in parallel by the plurality of instances, and different instances in the plurality of instances execute different building tasks; and
obtaining, by the first instance, the execution results that are respectively corresponding to the plurality of building tasks and that are fed back by the plurality of instances.

7. The method according to any one of claims 3 to 6, wherein generating, by the first instance, the plurality of building tasks based on the plurality of targets in the code file comprises:
grouping, by the first instance, the plurality of targets in the compilation control file based on a quantity of the plurality of instances or directories to which building products of the plurality of targets belong, to obtain the plurality of building tasks, wherein a target comprised in each building task is a group of targets in the plurality of targets.

8. The method according to claim 6 or 7, wherein the compilation control file further comprises another target different from the plurality of targets; and
obtaining, by the first instance, the software through building based on the execution results respectively corresponding to the plurality of building tasks comprises:
building, by the first instance, the another target in the compilation control file, to obtain a local execution result; and
obtaining, by the first instance, the software through building based on the local execution result and the execution results respectively corresponding to the plurality of building tasks.

9. A software building method, wherein the method comprises:
obtaining a compilation control file in a code file of to-be-built software and a dependency file needed for building the software, wherein the compilation control file comprises a plurality of targets and dependency information of the plurality of targets;
generating a plurality of building tasks for the software based on the compilation control file, wherein different building tasks in the plurality of building tasks comprise different targets;
executing the plurality of building tasks in parallel to obtain execution results respectively corresponding to the plurality of building tasks; and
obtaining the software through building based on the execution results respectively corresponding to the plurality of building tasks.

10. A software building apparatus, wherein the software building apparatus is used for a first instance in a resource pool, and the software building apparatus comprises:
a data obtaining module, configured to obtain, from a code repository, a code file of to-be-built software, and obtain, from a dependency library, a dependency file needed for building the software;
a generation module, configured to generate a plurality of building tasks based on a plurality of targets in the code file, wherein different building tasks in the plurality of building tasks comprise different targets;
an execution module, configured to indicate a plurality of instances in the resource pool to execute the plurality of building tasks in parallel by using the dependency file, to obtain execution results respectively corresponding to the plurality of building tasks; and
a building module, configured to obtain the software through building based on the execution results respectively corresponding to the plurality of building tasks.

11. The software building apparatus according to claim 10, wherein the data obtaining module is configured to perform distributed cache on the code file of the software in the code repository.

12. The software building apparatus according to claim 10 or 11, wherein the generation module is configured to:
determine a compilation control file in the code file, wherein the compilation control file comprises a plurality of targets and dependency information of the plurality of targets; and
generate the plurality of building tasks for the software based on the compilation control file.

13. The software building apparatus according to claim 12, wherein the plurality of targets are all targets defined in the compilation control file; or
the plurality of targets are targets that meet a preset condition in the compilation control file, and the preset condition comprises a preset type or a preset identifier.

14. The software building apparatus according to claim 13, wherein the software building apparatus further comprises:
a configuration module, configured to output a configuration interface; and determine the preset condition in response to a configuration operation of a user in the configuration interface for the preset condition.

15. The software building apparatus according to any one of claims 12 to 14, wherein the execution module is configured to:
distribute the plurality of building tasks to the plurality of instances according to a preset rule, wherein the plurality of building tasks are executed in parallel by the plurality of instances, and different instances in the plurality of instances execute different building tasks; and
obtain the execution results that are respectively corresponding to the plurality of building tasks and that are fed back by the plurality of instances.

16. The software building apparatus according to any one of claims 12 to 15, wherein the generation module is configured to group the plurality of targets in the compilation control file based on a quantity of the plurality of instances or directories to which building products of the plurality of targets belong, to obtain the plurality of building tasks, wherein a target comprised in each building task is a group of targets in the plurality of targets.

17. The software building apparatus according to claim 15 or 16, wherein the compilation control file further comprises another target different from the plurality of targets; and
the building module is configured to:
build the another target in the compilation control file, to obtain a local execution result; and
obtain the software through building based on the local execution result and the execution results respectively corresponding to the plurality of building tasks.

18. A software building apparatus, wherein the software building apparatus comprises:
a data obtaining module, configured to obtain a compilation control file in a code file of to-be-built software and a dependency file needed for building the software, wherein the compilation control file comprises a plurality of targets and dependency information of the plurality of targets;
a generation module, configured to generate a plurality of building tasks for the software based on the compilation control file, wherein different building tasks in the plurality of building tasks comprise different targets;
an execution module, configured to execute the plurality of building tasks in parallel to obtain execution results respectively corresponding to the plurality of building tasks; and
a building module, configured to obtain the software through building based on the execution results respectively corresponding to the plurality of building tasks.

19. A computing device cluster, comprising at least one computing device, wherein each computing device comprises a processor and a memory; and
the processor is configured to execute instructions stored in the memory, to enable the computing device cluster to perform the method according to any one of claims 1 to 9.

20. A computer-readable storage medium, wherein the computer-readable storage medium stores instructions; and when the instructions are run on at least one computing device, the at least one computing device is enabled to perform the method according to any one of claims 1 to 9.

21. A computer program product comprising instructions, wherein when the computer program product runs on at least one computing device, the at least one computing device is enabled to perform the method according to any one of claims 1 to 9.
